**Europäisches Patentamt**

**European Patent Office**

**Office européen des brevets**

(11) Veröffentlichungsnummer: **0 093 990**

**B1**

(12) # EUROPÄISCHE PATENTSCHRIFT

(45) Veröffentlichungstag der Patentschrift:
**27.04.88**

(21) Anmeldenummer: **83104256.9**

(22) Anmeldetag: **30.04.83**

(51) Int. Cl.⁴: **F 01 D 5/04,** F 01 D 3/00,
F 01 D 25/16, F 01 D 25/32,
F 01 D 11/00

(54) **Dampfturbine.**

(30) Priorität: **11.05.82 DE 3217598**
**13.01.83 DE 3300864**

(43) Veröffentlichungstag der Anmeldung:
**16.11.83 Patentblatt 83/46**

(45) Bekanntmachung des Hinweises auf die Patenterteilung:
**27.04.88 Patentblatt 88/17**

(84) Benannte Vertragsstaaten:
**DE FR GB**

(56) Entgegenhaltungen:
**CH-A-235 102**
**DD-A-88 733**
**DE-A-1 551 190**
**DE-A-3 005 058**
**DE-B-1 044 527**
**DE-B-1 144 738**
**US-A-1 959 703**

**AKADEMISCHEN VEREIN HÜTTE, "Hütte, des Ingenieurs Taschenbuch" 28. neubearbeitete Auflage, Teil A: "Maschinenbau", 1054 W. Ernst & Sohn, Berlin, DE, Seiten 115-116**
**MTZ, Jahrgang 16, Nr. 11, November 1955, STUTTGART (DE), F. EISERMANN: "Die Erzeugung von gegossenen Schaufeln und Schaufelrädern mit dem Sulzer-Präzisionsgiessverfahren", Seiten 319-326**

(73) Patentinhaber: **A.G. Kühnle, Kopp & Kausch, Postfach 265 Hessheimer Strasse 2, D-6710 Frankenthal/Pfalz (DE)**

(72) Erfinder: **Linck, Klaus, Unterer Wiesenrech 7, D-6711 Grosskarlbach (DE)**
Erfinder: **Schmitt, Bernd, Dipl.- Ing., Bürgermeister- Diehl- Strasse 10, D-6719 Eisenberg (DE)**
Erfinder: **Nottrott, Joachim, Römerstrasse 10, D-6100 Darmstadt (DE)**

(74) Vertreter: **Klose, Hans, Dipl.- Phys., Kurfürstenstrasse 32, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Dampfturbine mit den im Oberbegriff des Patentanspruchs 1 angegebenen Merkmalen.

In der DE-A-1 551 190 ist eine radial einwärts durchströmte Turbine beschrieben, deren Laufrad eine zentrale Bohrung für eine einseitig gelagerte Welle aufweist. Die Laufschaufeln sind an der axialen Stirnfläche des Laufrades achsparallel angeordnet und es muß mit hohen Biegemomenten gerechnet werden. Der Durchmesser der zentralen Bohrung des Laufrades muß entsprechend den Festigkeitsberechnungen auf den Durchmesser der Welle abgestimmt sein. Da je nach Auslegungsdrehzahl, Dampfdurchsatz, Größe der Turbine und weiterer Auslegungskriterien sich ein optimaler Durchmesser ergibt, ist eine derartige Verbindung zwischen der Welle und dem Laufrad für eine Standardisierung nach Art eines Baukastensystems nicht geeignet. Ferner kann infolge einer Spannungskonzentration im Bereich der zentralen Bohrung eine nachteilige Plastifizierung auftreten. Die bei hohen Drehzahlen auftretenden Fliehkräfte erfordern eine starke Dimensionierung des Schaufelfußes und eine entsprechend große axiale Länge und Masse des Laufrades.

Aus der DE-B-1 044 527 ist eine Vorrichtung zur Verbindung einer hohlen Turbinenwelle, insbesondere bei einem Gasturbinentriebwerk, mit einem freitragend angeordneten Turbinenlaufrad bekannt. Das Laufrad ist mit der Turbinenwelle über ein weiteres Bauteil verbunden, dessen Wellenstummel durch eine zentrale Bohrung des Laufrades hindurchgeführt ist und welches Bauteil einen Flansch mit einer Planverzahnung aufweist. Die zugeordnete Planverzahnung des Laufrades befindet sich an der vorderen, der Turbinenwelle abgewandten Stirnfläche des Laufrades. Der Wellenstummel des genannten Bauteiles ist über konische Flächen und ein Gewinde an der Innenfläche der im Inneren hohlen Turbinenwelle befestigt. Diese Befestigungsart setzt eine als Hohlwelle ausgebildete Turbinenwelle voraus und erfordert einen vergleichsweise großen konstruktiven Aufwand.

Aus der DE-A-3 005 058 ist es bekannt, das Laufrad einer Gasturbine mittels einer Klauenkupplung mit der Welle zu verbinden. Die an der Rückseite des Laufrades angeordnete Klauenkupplung ermöglicht relative Verschiebungen des Laufrades und der Welle, um unterschiedliche thermische Ausdehnungen derselben aufnehmen zu können. An die Genauigkeit der Zentrierung können keine allzu hohen Anforderungen gestellt werden und hohe Drehzahlen lassen sich nicht ohne weiteres realisieren. Zur Verbindung ist ferner eine Schraube vorgesehen, die durch eine zentrale Bohrung des Laufrades hindurch in ein Gewinde der Welle eingeschraubt ist.

Ferner ist in der DE-B-1 144 738 eine Dampfturbine beschrieben, deren Laufrad zwei Kränze von Laufschaufeln aufweist. Diese Dampfturbine radialer Bauart weist bei einer vorgegebenen Dampfgeschwindigkeit einen hohen Umfangswirkungsgrad auf. Dieser Umfangswirkungsgrad entspricht nahezu dem einer einstufigen Turbine, wobei jedoch die Umfangsgeschwindigkeit nicht unerheblich geringer sein kann. Die Laufschaufeln sind separat in das Laufrad eingesetzt, wodurch eine vergleichsweise große axiale Länge und große Massenkräfte bedingt sind. Die Lagerung der Welle erfolgt daher zu beiden Seiten des Laufrades und die insgesamt aufwendige Konstruktion bedingt hohe Fertigungskosten. Aufgrund der großen Masse des Laufrades sind die aus thermodynamischen Gründen erforderlichen Umfangsgeschwindigkeiten in der Praxis nur mit einem großen Aufwand zu beherrschen.

Der Erfindung liegt die Aufgabe zugrunde, die Dampfturbine der gattungsgemäßen Art dahingehend weiterzubilden, daß bei reduziertem Konstruktionsaufwand und Standardisierung in Baugruppen ein hoher Wirkungsgrad bei hohen Drehzahlen erreicht werden kann. Diese Aufgabe wird durch die im Kennzeichen des Patentanspruchs 1 angegebenen Merkmale gelöst.

Die Dampfturbine zeichnet sich durch eine einfache Konstruktion aus und kann im Hinblick auf das die Wirkungsgradmaximum zuverlässig mit hohen Drehzahlen betrieben werden. Die Masse des Laufrades ist gering und die einseitige, fliegende Lagerung des Laufrades erfolgt bei einer wirtschaftlichen Konstruktion. Das Laufrad weist keine zentrale Bohrung zur Durchführung der Welle auf, sondern ist über die an der Rückseite angeordnete Planverzahnung mit einer entsprechenden Planverzahnung an der axialen Stirnfläche der Welle verbunden. Hierdurch wird zum einen eine hohe Festigkeit des Laufrades gewährleistet und zum anderen in einfacher Weise die Voraussetzung für eine Typisierung und Standardisierung geschaffen. Laufräder und Wellen können nach Typenreihen standardisiert und vorgefertigt werden, wobei jeweils überstimmende Planverzahnungen vorgesehen werden. Je nach Einsatzbedingungen und Anforderungen können dann Laufräder und Wellen beim Zusammenbau der Dampfturbine miteinander kombiniert werden. Aufgrund der in axialer Richtung schmalen Ausbildung des Laufrades einschließlich Laufschaufeln werden die aus thermodynamischen Gründen erforderlichen Umfangsgeschwindigkeiten beherrscht. Durch die Anordnung der Planverzahnung an der Rückseite des Laufrades sowie der Stirnfläche der Welle kann eine Optimierung des Kraftflusses erfolgen, ohne daß durch eine große zentrale Bohrung Nachteile zu befürchten sind. Die axiale Verbindung von Laufrad und Welle erfolgt über Schrauben, wobei gegebenenfalls auch nur eine einzelne zentrale Schraube vorgesehen sein kann; in jedem Falle ist der Bohrungsdurchmesser im Laufrad für die Schraube bzw. Schrauben wesentlich kleiner als der Wellendurchmesser. Der dreieckförmige Bereich, an welchem die radial inneren Laufschaufeln angeordnet sind, ermöglicht eine optimale Materialausnutzung bei geringer Masse. Auch bei hohen Drehzahlen werden Biegemomente infolge der auf die Laufschaufeln einwirkenden Fliehkräfte weitgehend vermieden und Spannungskonzentrationen in dem dreieckförmigen Bereich zuverlässig beherrscht. Die Planverzahnung sowie wenigstens eine, zur Verbindung mit der Welle vorgesehene Schraube sind in einem näherungsweise rechteckförmigen, radial innenliegenden Bereich des Laufrades angeordnet, dessen axiale Länge kleiner ist als die axiale Länge des radial nach außen anschließenden dreieckförmigen Bereiches. Eine weitere Verringerung der Laufradmasse wird erreicht und der Kraftfluß von den radial inneren Laufschaufeln geht auf relativ kurzem Weg zu der Planverzahnung auf der dückseite des Laufrades. Die Dampfturbine kann problemlos auch nur über einen Teil des Umfanges vom Laufrad mit einen oder mehreren Dampfstrahlen beaufschlagt werden, wobei die hierdurch bedingten Querkräfte, die entsprechend der Drehzahl pulsierend einwirken, funktionssicher vom Laufrad auf die Welle übertragen werden. Aufgrund der günstigen Massenverteilung und der insgesamt geringen Masse des Laufrades wird als Welle unmittelbar die Getriebewelle vorgesehen, so daß das Laufrad über die Getriebewelle mittels deren Lager in einem Getriebegehäuse gelagert ist. Die bisher übliche separate Lagerung des Laufrades bzw. der Laufradwelle im Turbinengehäuse entfällt, wodurch eine merkliche Reduzierung des konstruktiven Gesamtaufwandes erreicht wird. Die Dampfturbine und das nachgeschaltete Getriebe sind in einfacher Weise integriert und besondere Verbindungteile zwischen einem Lagergehäuse oder einem Getriebe entfallen. Die Dampfturbine kann ohne Schwierigkeiten mit unterschiedlich ausgebildeten Getrieben zwecks Drehzahlanpassung kombiniert werden, wobei mittels der erläuterten Planverzahnung die Standardisierung nach Typenreihen in zweckmäßiger Weise erfolgen kann.

In einer besonderen Ausgestaltung wird in den Einströmdüsen der Druck in Abstimmung mit einem vorgegebenen Reaktionsgrad der Beschaufelung nur soweit abgebaut, daß in einem daum zwischen den Einströmdüsen und einer Wellendichtung auf das Laufrad eine einem Axialschub entgegengerichtete Kraftkomponente wirksam und im Auslegungspunkt zumindest näherungsweise ein Axialschubausgleich erreicht wird. Die Beschaufelung wird mit einem Reaktionsgrad ausgeführt und der Druck hinter den Einströmdüsen ist größer als der Abdampfdruck im Abströmkanal. In der Praxis hat es sich als zweckmäßig erwiesen, wenn etwa 90 Prozent der Energie in den Düsen und bis zu 10 Prozent im Laufrad umgesetzt werden.

In einer besonderen Ausgestaltung sind dem Radiallager der Welle äußere Lagerdämpfungselemente zugeordnet, wobei die Auslegungsdrehzahl der Dampfturbine bevorzugt über der ersten biegekritischen Drehzahl liegt. Die Dämpfungselemente bewirken zuverlässig eine Begrenzung von Schwingungsamplituten. Die aus thermodynamischen Gründen erforderlichen hohen Umfangsgeschwindigkeiten können mit einer hohen Betriebssicherheit beherrscht werden. Das Durchlaufen der kritischen Drehzahl sowie der überkritische Lauf der Dampfturbine werden mit hoher Funktionssicherheit ermöglicht.

Nachfolgend wird die Erfindung anhand der in der Zeichnung dargestellten Ausführungsbeispiele näher erläutert. Da die Dampfturbine ein radial einwärts durchströmtes Laufrad aufweist, wird der Einfachheit halber die Dampfturbine als Radialturbine bezeichnet. Es zeigen:

Fig. 1 einen axialen Längsschnitt durch eine Radialturbine, deren Laufrad über eine Planzverzahnung mit der Welle verbunden ist,

Fig. 2 teilweise eine schematischen Schnitt quer zur Drehachse einer Radialturbine,

Fig. 3 einen Längsschnitt durch eine Radialturbine mit geneigten Austrittsflächen der Düsen des Düsenringes,

Fig. 4 einen Längsschnitt durch eine Radialturbine mit geneigten Eintrittsflächen der Laufradsenaufeln,

Fig. 5 in Vergrößerung einige Düsen mit geneigten Austrittsflächen.

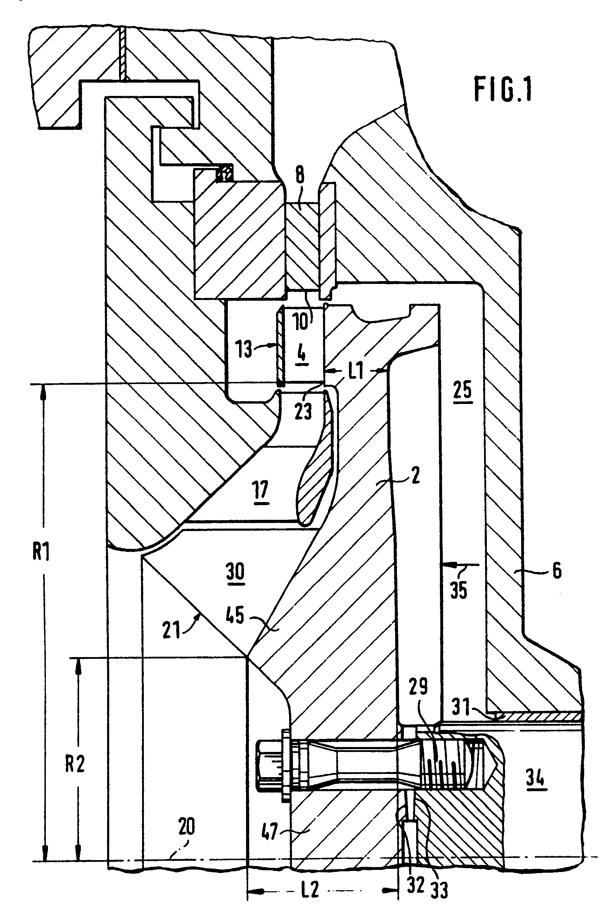

In Fig. 1 ist ein Längsschnitt durch eine Radialturbine und zwar im Bereich eines Laufrades 2 dargestellt. Ein Turbinengehäuse 6 nimmt in bekannter Weise das Laufrad 2 auf und enthält einen Düsenring 8 mit über den Umfang verteilten Einströmdüsen 10. Das Laufrad ist um die Längsachse 20 drehbar und es enthält, radial außenliegend, äußere Laufschaufeln 4 eines ersten Laufschaufelkranzes 13. Nachfolgend durchströmt das Medium in bekannter Weise mit dem Turbinengehäuse 6 verbundene Leitschaufeln 17 und gelangt dann zu zweiten, inneren Laufschaufeln 30 eines zweiten Laufsachaufelkranzes 21. Es liegt somit eine zweistufige Radialturbine vor, bei welcher das Medium nach Verlassen des zweiten Laufschaufelkranzes 31 etwa in axialer Richtung über einen Diffusor in bekannter Weise abströmt.

Das Laufrad 2 ist mit den Laufschaufeln 4, 30 einstückig ausgebildet und es besteht aus einem hochfesten legierten Stahl. Das Laufrad 2 ist in Feinguß hergestellt. Im radial innenliegenden Bereich der Schaufelbasis 23 weist das Laufrad einen Radius R1 auf, wobei dort eine axiale Länge L1 gegeben ist. Das Verhältnis L1 zu R1 ist erfindungsgemäß kleiner als 0,15 une es bleibt in radialer Richtung nach innen bis näherungsweise zu den inneren Laufschaufeln 30 weitgehend erhalten. Die Querschnittsfläche ist in dem genannten Bereich etwa rechteckförmig. Das Laufrad 2 ist insgesamt als eine schmale, in Richtung der Längsachse 20 kurze Scheibe ausgebildet, wodurch eine geringe Masse des Laufrades sichergestellt ist. Es hat sich überraschenderweise erwiesen, daß die bei hohen Drehzahlen des Laufrades 2 auftretenden Massenkräfte zuverlässig aufgenommen werden. Durch die einstückige Ausbildung von Laufrad und Laufschaufeln sind entsprechend schwere Aufnahmevorrichtungen für Schaufelfüße erfindungsgemäß nicht erforderlich. Die Laufschaufeln 30 sind über einen etwa dreieckförmigen Bereich 45 mit dem Laufrad 2 verbunden. Über diesen Bereich werden durch Zentrifugalkräfte verursachte Biegebeanspruchungen zuverlässig aufgenommen. Das Laufrad 2 weist im Bereich der Spitze des genannten dreieckförmigen Bereichs 45 bzw. an dem radial innenliegenden Schaufelfuß der Laufschaufel 30 eine axiale Länge L2 auf. Diese axiale Länge L2 ist erfindungsgemäß vergleichsweise klein ausgebildet, wobei das Verhältnis zu dem dort vorhandenen Radius R2 kleiner als 0,8 ist. An den dreieckförmigen Bereich 45 schließt sich radial nach innen ein etwa rechteckförmiger Bereich 47 an, welcher eine geringere axiale Länge als L2 aufweist. Auch hierdurch wird eine wesentliche Reduzierung der Masse des Laufrades 2 erreicht. Das erfindungsgemäß ausgebildete Laufrad 2 ist als eine in axialer Richtung schmale Scheibe ausgeführt, die mit den Laufschaufeln 4, 30 aus einem einzigen Stück besteht. Die Gesamtmasse des Laufrades 2 kann daher sehr klein gehalten werden, so daß die aus thermodynamischen Gründen erforderlichen hohen Umfangsgeschwindigkeiten bzw. Drehzahlen auch zuverlässig beherrscht werden.

Das Laufrad 2 ist über eine Planversahnung 32, 33 mit einer Welle 34 gekoppelt, wobei über Schrauben 29 eine feste Verbindung hergestellt ist. Das Laufrad 2 und auch die Welle 34 weisen in dem oben genannten rechteckförmigen Bereich 47 mehrere über den Umfang verteilte Bohrungen auf, durch welche die Schrauben 29 geführt sind. Die Bohrung der Welle 34 ist als eine Gewindebohrung ausgebildet. Die Planverzahnungen 32, 33 liegen im wesentlichen in radialen Ebenen und weisen konische und das Laufrad genau zentrierende Zähne auf. Aufgrund dieser Ausgestaltung können unterschiedlich ausgebildete Laufräder und Wellen miteinander in besonders einfacher Weise verbunden werden. Laufräder und Wellen können nach Typenreihen vorgefertigt und standardisiert werden, um nach Bedarf in der erforderlichen Weise dann miteinander verbunden zu werden. Die Planverzahnungen sind zweckmäßig als eine Hirth-Verzahnung ausgebildet, mittels welcher eine gute Zentrierung des Laufrades erreicht wird. Die Welle 34 ist Bestandteil eines Getriebes, welches sich in der Zeichnung hier rechts an das Gehäuse 6 anschließt. Im Rahmen der Erfindung ist es jedoch von besonderer Bedeutung, daß das Laufrad 2 in einfacher Weise mit der Getriebewelle 34 verbindbar ist. Auch das Getriebe kann somit standardisiert werden, so daß je nach den Anforderungen ein Getriebe mit dem gewünschten Übertragungsgehältnis oder sonstigen Leistungsdaten mit der Turbine verbindbar ist. Da das Laufrad 2 unmittelbar an die Welle 34 gekoppelt ist, ist ein besonders Lager für das Laufrad nicht erforderlich. Turbinen und Getriebe sind miteinander integriert und das Getriebelager stützt sowohl das Laufrad 2 als auch die Welle 34 des Getriebs. Es sei hier hervorgehoben, daß das Laufrad 2 fliegend gelagert ist, so daß nur eine einzige Wellendichtung 31 mit entsprechend geringen Leckdampfverlusten erforderlich ist.

Die Radialturbine ist mit einer leichten Reaktion in der erstem Stufe ausgeführt. Hierbei hat es sich als zweckmäßig erwiesen, etwa 90 Prozent in den Einströmdüsen 10 des Düsenringes 8 umzusetzen und bis zu etwa 10 Prozent im Laufrad umzusetzen. Dies gilt für den Beriech des Auslegungspunktes der Radialturbine. In einem Raum 25, welcher zwischem den Einströmdüsen 10 und der Wellendichtung 31 sich befindet, und welcher ferner einerseits durch das Gehäuse 6 und andererseits durch das Laufrad 2 begrenzt wird, bildet sich somit ein vorgegebener Druck aus, welcher im Richtung des Pfeiles 35 auf das Laufrad 2 wirkt und zum Ausgleich des Axialschubes dient.

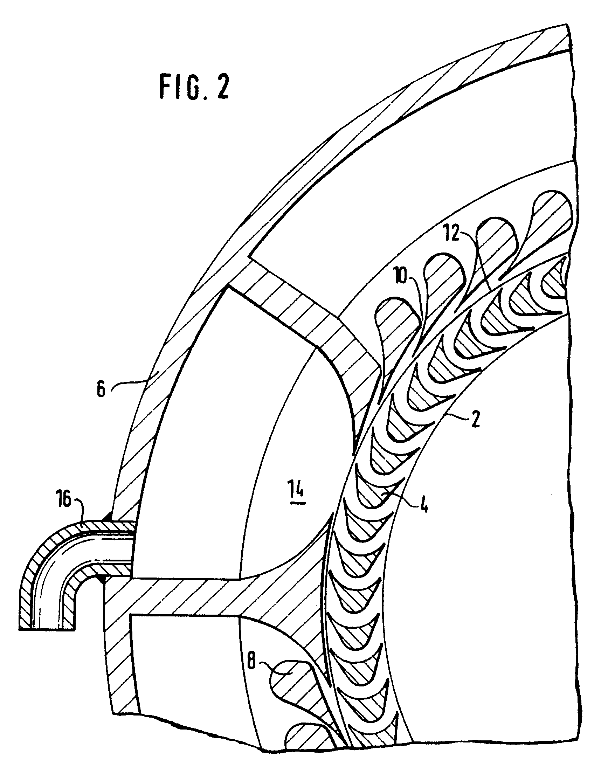

Die schematischen Darstellung gemäß Fig. 2 zeigt ein Laufrad 2 mit Lauschaufeln 4. Das Laufrad ist in hinlänglich bekannterkannt Weise innerhalb eines Turbinengehäuse 6 angeordnet, welches einen den Laufschaufeln 4 zugeordneten Düsenring 8 mit einer Anzahl von Düsen 10 enthält. Durch die Düsen 10 zusammen mit dem Dampf eintretende Schmutzteilchen gelangen ebenfalls in einen Ringspalt 12 zwischen Laufschaufeln 4 und Düsenring 8.

Da derartige Schmutzteilchen langsamer als die Umfangsgeschwindigkeit sind, werden sie grundsätzlich ständig zwischen den Laufschaufeln 4 und Düsenring hin und her reflektiert und zwar solange, bis sie klein genug sind, um dem Strömungsmedium zu folgen. Die durch den häufigen Aufprall der Schmutzteilchen an den Laufschaufeln 4 und dem Düsenring 8 bedingte Schmutzempfindlichkeit der Radialturbine wird durch einen erfindungsgemäß vorgesehenen Fangraum 14 im Turbinengehäuse 6 erheblich verringert. Die Bewegungsbahn der Schmutzteilchen wird aufgrund des Fangraumes 14 unterbrochen und eine weitere Refelxion is damit unterbunden. Es sei hervorgehoben, daß über den Umfang der Radialturbine verteilt gegebenenfalls auch mehrere derartige Fàngräume 14 vorhanden sind, so daß eintretende Schmuzteilchen bereits nach wenigen Reflexionsvorgängen aus dem Ringspalt 12 heraus in den Fangraum 14 gelangen. An den Fangraum 14 ist eine Leitung 16 angeschlossen, mittels welcher eine kontinuerliche Abführung der Schmutzteilchen aus dem Fangraum 14 erfolgt. Der Fangraum 14 befindet sich im wesentlichen in den gleichen Radialebenen wie die Laufschaufeln 4 und der Düsenring 8 mit seiner Düse 10.

In einer hier nicht dargestellten Ausführungsform der Radialturbine sind auf dem Laufrad 2 wenigstens eine order gegebenenfalls auch mehrere der normalerweise in Umfangsrichtung symmetrisch angeordneten Laufschaufeln 4 nicht vorhanden. Es sind also zwischen den Laufschaufeln 4 bewußt Lücken vorgesehen, welche Durchtrittsmöglichkeiten für Schmutzteilchen und zwar hier in radialer Richtung nach innen darstellen. Der gleiche Effekt kann auch dadurch erzielt werden, daß die Teilung der Laufschaufeln 4 an wenigstens einer Stelle des Umfanges vergrößert ist, wodurch ebenfalls eine Unsymmetrie erreicht wird und die Schmutzteilchen nach innen abgeleitet werden können.

Es sei an dieser Stelle ausdrücklich hervorgehoben, daß die bereits erläuterten Maßnahmen und auch die nachfolgend noch zu erläuternden Maßnahmen in Rahmen dieser Erfindung miteinander kombiniert werden können, um den jeweiligen Anforderungen und Einsatzbedingungen entsprechend optimale Verhältnisse, insbesondere im Hinblick auf einen hohen Wirkungsgrad, zu erhalten.

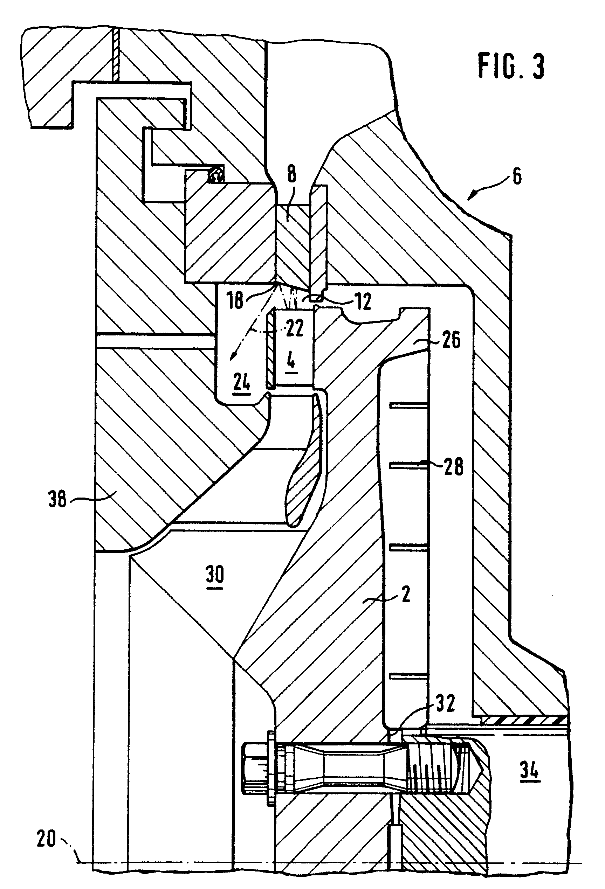

In Fig. 3 ist ein Längsschnitt durch eine Radialturbine dargestellt, bei welcher die Austrittsflächen 18 des Düsenringes zur Drehachse 20 geneigt angeordnet sind. Wie durch die strichpunktierten Linien 22 angedeutet, gelangt ein Schmutzteilchen bereits nach sehr wenigen Reflektionsvorgängen in einen Ringraum 24. Die durch die strichpunktierte Linie 22 angedeutete Bewegungsbahn erstreckt sich natürlich nicht in der Zeichenebene, sondern in Umfangsrichtung.

Die Laufschaufeln 4 befinden sich auf einer ersten axialen Stirnfläche, während auf der gegenüberliegenden, zweiten axialen Stirnfläche des Laufrades 2 ein ringförmiges Gegengewicht 26 vorgesehen ist. Das ringförmige Gegengewicht 26 ist durch axiale Schlitze 28 in einzelne Segmente unterteilt, um eine einseitige Versteifung und eine hieraus resultierenden zusätliche Belastung des Laufrades 2 möglichst zu unterbinden. Das Laufrad 2 ist als eine in Richtung der Drehachse 20 vergleichsweise schmale Scheibe ausgebildet, wobei die genannten Laufschaufeln 4 sowie weitere Laufschaufeln 30 eines zweiten Laufschaufelkranzes einstückig mit dem Laufrad 2 ausgebildet sind. Aufgrnd dieser einstückigen Ausbildung, wobei als Werkstoff zweckmäßig ein hochfester, legierter Stahl und zwar bevorzugt in Feinguß verwendet wird, wird eine vergleichsweise geringe rotierende Masse erreicht. Das Laufrad 2 ist über eine Planverzanrung 32, welche hier als eine Hirth-Verzahnung ausgebildet ist, mit einer Welle 34 verbunden. Das Laufrad 2 weist also keine zentrale durchgehende Bohrung zum Ankoppeln an eine Welle auf, sondern es ist also eine durchgehende schmale Scheibe ausgebildet.

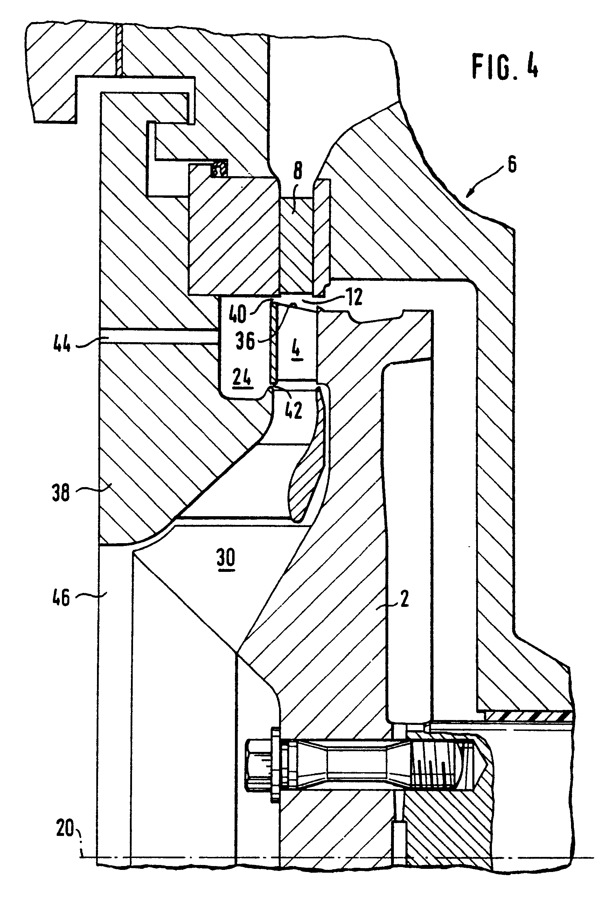

Die Ausführungsform gemäß Fig 4. unterscheidet sich von der obigen im wesentlichen dadurch, daß die Eintrittsflächen 36 der Laufschaufeln 4 zur Drehachse 2 geneigt bzw. konisch ausgebildet sind. Auch hierdurch erfahren eintretende Schmutzteilchen eine Axialkraftkomponente, welche zu einer sehr schnellen Abführung der Schmutzteilchen aus dem Ringspalt 12 führt. Das Turbinengehäuse 6 weist hier ein etwa ringförmige Bauteil 38 auf, welches im Beriech der Laufschaufeln 4 derart ausgebildet ist, daß der oben bereits erwähnte Ringraum 24 geschaffen ist. In diesen Ringraum 24 gelangt über einen Dichtungsspalt 36 ein kleiner, jedoch nicht unerheblicher Anteil des Strömungsmediums, und zwar mit einer den jeweiligen Gegebenheiten entsprechenden Leckrate. Dieser Anteil des Strömungsmediums erfährt nun zunächst eine Abbremsung, um dann beim Eintritt über einen weiteren Dichtungsspalt 42 wieder beschleunigt zu werden; hiermit ist grunsätzlich eine Verringerung des Wirkungsgrades verbunden. Um eine hohen Wirkungsgrad zu erreichten, mündet daher in den Ringraum 24 wenigstens eine Ausgleichsöffnung 44, welche auf den Abströmskanal 46 geführt ist. Der durch den Dichtungsspalt 40 austretende Leckanteil des Strömungsmediums wird somit abgeführt umd muß nicht mehr beschleunigt werden.

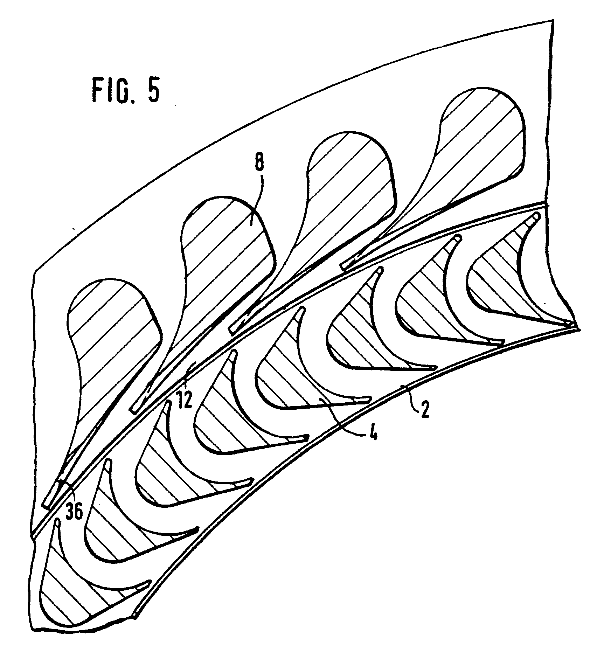

Fig. 5 zeigt in einer Vergrößerung einen Düsenring 8, bei welchem die Eintrittsflächen 36 zur Zeichenebene und somit zur Drehachse des Laufrades 2 geneigt angeordnet sind. Aufgrund der Neigung bzw. Schrägstellung der Austrittsflächen erhalten Schmutzteilchen eine Axialkraftkomponenten, welche eine schnelle Ableitung aus dem Ringspalt 12 bewirkt.

**Patentansprüche**

1. Dampfturbine mit einem radial einwärts durchströmten und fliegend gelagerten Laufrad (2), welches in Richtung der Drehachse (20) als eine schmale Scheibe mit zwei konzentrischen Kränzen (13, 21) von Laufschaufeln (4, 30) ausgebildet und mit einer Welle (34) verbunden ist, wobei das Laufrad (2) und die Laufschaufeln (4, 30) aus einem Stück bestehen, dadurch gekennzeichnet, daß die Welle (34) an einer axialen Stirnfläche ein Planverzahnung (33) aufweist, die mit einer Planverzahnung (32) an der Rückseite des Laufrades (2) in Eingriff steht, wobei die Planverzahnungen (32, 33) im wesentlichem in radialen Ebenen angeordnet sind und konische, das Laufrad (2) zentrierende Zähne aufweisen, daß die radial innerem Laufschaufeln (30) an einem im axialen Schnitt mäherungsweise dreieckförmigen Bereich (45) des Laufrades (2) angeordnet sind, daß die Planverzahnung (33) sowie wenigstens eine, zur Verbindung mit der Welle (34) vorgesehene Schraube (29) in einem näherungsweise rechteckförmigen, radial innenliegenden Bereich (47) des Laufrades (2) angeordnet sind, dessen axiale Länge kleiner ist als die axiale Länge (L 2) des Laufrades (2) im dem Bereich (45),

und daß die Welle (34) die Welle eines Getriebes ist, wobei das Laufrad (2) über die Welle (34) mittels deren Lager in einem Getriebegehäuse gelagert ist.

2. Dampfturbine nach Anspruch 1, dadurch gekennzeichnet, daß die Planverzahnungen (32, 33) als Hirth-Verzahnung ausgebildet sind.

3. Dampfturbine nach Anspruch 1 oder 2, dadurch gekennzeichnet, daß in Einströmdüsen (10) der Druck des Strömungsmediums in Abstimmung mit einem vorgegebenen Reaktionsgrad der Beschaufelung nur soweit abgebaut wird, daß in einem Raum (25) zwischen den Einströmdüsen (10) und einer Wellendichtung (31) auf das Laufrad (2) eine einem Axialschub entgegengerichtete Kraftkomponente wirksam und im Auslegungspunkt zumindest näherungsweise ein Axialschubausgleich erreicht wird.

4. Dampfturbine nach einem der Ansprüche 1 bis 3, dadurch gekennzeichnet, daß dem Radiallager der Welle (34) äußere Lagerdämpfungselemente zugeordnet sind und daß die Auslegungsdrehzahl der Dampfturbine bevorzugt über der ersten kritischen Drehzahl liegt.

5. Dampfturbine nach einem der Ansprüche 1 bis 4, dadurch gekennzeichnet, daß das Laufrad (2) und die Welle (34) exzentrisch außerhalb der Drehachse (20) angeordnete Bohrungen für die Schrauben (29) zur Verbindung aufweisen.

6. Dampfturbine nach einem der Ansprüche 1 bis 5, wobei in einem Turbinengehäuse (6) ein Düsenring (8) angeordnet ist, dadurch gekennzeichnet, daß unter Ausnutzung des Reflexionsvermögens die Bewegungsbahnen von Schmutzteilchen, die mit dem Dampf eintreten, derart beeinflußt werden, daß sie den Bereich der Laufschaufeln (4) und/oder des Düsenringes (8) verlassen.

7. Dampfturbine nach Anspruch 6, dadurch gekennzeichnet, daß im Turbinengehäuse (6) und/oder im Düsenring (8) wenigstens ein Fangraum (14) vorgesehen ist.

8. Dampfturbine nach Anspruch 7, dadurch gekennzeichnet, daß zur kontinuierlichen Abführung von Schmutzteilchen eine Leitung (16) in den Fangraum (14) mündet.

9. Dampfturbine nach einem der Ansprüche 6 bis 8, dadurch gekennzeichnet, daß der Kranz der Laufschaufeln (4) an wenigstens einer Stelle seines Umfanges eine Durchtrittsmöglichkeit aufweist, wobei bevorzugt die Teilung der Laufschaufeln (4) und/oder die Abstände der Laufschaufeln (4) vergrößert sind.

10. Dampfturbine nach einem der Ansprüche 6 bis 9, dadurch gekennzeichnet, daß die Austrittsfläche (18) wenigstens einer Düse des Düsenringes (8) zur Drehachse (20) geneigt angeordnet ist.

11. Dampfturbine nach einem der Ansprüche 6 bis 10 dadurch gekennzeichnet, daß die Eintrittsfläche (36) wenigstens eine Laufschaufel (4) des Laufrades (2) zur Drehachse (20) geneigt aufweist.

12. Dampfturbine nach einem der Ansprüche 1 bis 11, dadurch gekennzeichnet, daß das Laufrad (2) an seiner der ersten Stirnfläche mit den Laufschaufeln (4) abgewandten anderen axialen Stirnfläche ein Gegengewicht (26) aufweist, das bevorzugt als ein in Umfangsrichtung mittels axialen Schlitzen (28) in einzelne Segmente unterteilter Ring ausgebildet ist.

**Claims**

1. Steam turbine with an over-mounted rotor disc (2) for radially inward through-flow, which is formed in the direction of the rotational axis (20) as a narrow disc with two concentric collars (13, 21) of rotating blades (4, 30) and is connected with a shaft (34), wherein the rotor disc (2) and the rotating blades (4, 30) consist of one piece, characterized in that the shaft (34) comprises a crown gear (33) on an axial front surface, which meshes with a crown gear (32) on the back of the rotor disc (2), whereby the crown gears (32, 33) are substantially arranged in radial planes and comprise conical teeth centering the rotor disc (2), that the radial inner rotating blades (30) are arranged on a region (45) of the rotor disc (2) that is almost triangular in axial section, that the crown gear (33) and at least one screw (29) for a connection with the shaft (34) are arranged in a nearly rectangular, radially interior region (47) of the rotor disc (2), whose axial length is shorter than the axial length (L2) of the rotor disc (2) in the region (45), and that the shaft (34) is the shaft of a drive, whereby the rotor disc (2) is mounted above the shaft (34) by means of its mounting, in a drive housing.

2. Steam turbine according to claim 1, characterized in that the crown gears (32, 33) are formed as serrations.

3. Steam turbine according to claim 1 or 2, characterized in that the pressure of the flowing medium in in-flow nozzles (10) is only reduced in accordance with a predetermined degree of reaction of the blading, that in a space (25) between the in-flow nozzle (10) and a shaft seal (31) on the rotor disc a component of force directed against an axial thrust is effectively achieved and, at the given point at least nearly compensating for the axial thrust.

4. Steam turbine according to one of claims 1 to 3, characterized in that external bearing dampening elements are assigned to the radial bearing of the shaft (34) and that the design speed of the steam turbine is preferably above the first critical speed.

5. Steam turbine according to one of claims 1 to 4, characterized in that the rotor disc (2) and the shaft (34) have bores arranged eccentrically outside the axis of rotation (20) for the connecting screws (29).

6. Steam turbine according to one of claims 1 to 5, wherein nozzle ring (8) is arranged in a turbine housing (6), characterized in that, by exploiting the reflection capability, the paths of motion of dirt particles that enter with the steam are influenced in such a way that they leave the area of the rotating blades (4) and/or the nozzle ring (8).

7. Steam turbine according to claim 6, characterized in that at least one collecting space (14) is provided in the turbine housing (6) and/or in the nozzle ring (8).

8. Steam turbine according to claim 7, characterized in that a duct (16) joins into the collecting space (14) for the continuous discharge of dirt particles.

9. Steam turbine according to one of claims 6 to 8, characterized in that the collar of the rotating blades (4) has a passage at at least one point on its circumference, where the partition of the rotating blades (4) and/or the distances between rotating blades (4) are preferably enlarged.

10. Steam turbine according to one of claims 6 to 9, characterized in that the outlet surface (18) is arranged with at least one nozzle of the nozzle ring (8) inclined towards the axis of rotation (20).

11. Steam turbine according to one of claims 6 to 10, characterized in that the inlet surface (36) has at least one rotating blade (4) of the rotor disc (2) inclined towards the axis of rotation (20).

12. Steam turbine according to one of claims 1 to 11, characterized in that the rotor disc (2) has a counter- balance (26) on that other axial front surface which is directed away from the first front surface with the rotating blades (4), which is preferably formed as a ring subdivided into individual segments in the direction of circumference by means of axial slits (28).


**Revendications**

1. Turbine à vapeur comprenant une roue (2) parcourue radialement par la vapeur, de l'extérieur vers l'intérieur, et montée flottante, qui est constituée par un disque mince, considéré parallèlement à l'axe de rotation (20), qui porte deux couronnes concentriques (13, 21) d'aubes (4, 30) et est reliée à un arbre (34), la roue (2) et les aubes (4, 30) étant faites d'une seule pièce, caractérisée en ce que l'arbre (34) présente, sur une surface frontale, une denture plate (33) qui est en prise avec une denture plate (32) portée par la face arrière de la roue (2), les dentures plates (32, 33) étant disposées sensiblement dans des plans radiaux et présentant des dents coniques qui centrent la roue (2), en ce que les aubes radialement intérieures (30) sont agencées sur une région (45) de la roue (2) qui est approximativement triangulaire en coupe axiale, en ce que la denture plate (33) ainsi qu'au moins une vis (29) prévue pour l'assemblage à l'arbre (34) sont disposées dans une région radialement intérieure (47) de la roue (2) qui est approximativement rectangulaire et dont la longueur axiale est inférieure à la longueur axiale (L2) de la roue (2) dans la région (45), en ce que l'arbre (34) est l'arbre d'un réducteur, la roue (2) étant montée dans un carter de réducteur par l'intermédiaire de l'arbre (34), au moyen des paliers de cet arbre.

2. Turbine à vapeur selon la revendication 1, caractérisée en ce que les dentures plates (32, 33) sont réalisées sous la forme de dentures de Hirth.

3. Turbine à vapeur selon la revendication 1 ou 2, caractérisée en ce que, dans des buses d'entrée (10) la pression du fluide circulant n'est réduite, en accord avec un degré de réaction prédéterminé de l'aubage, que dans une mesure suffisante pour que, dans une région (25) comprise entre les buses d'entrée (10) et un joint d'arbre (31), il s'exerce sur la roue (2) une composante de force qui est antagoniste à une poussée axiale et qu'au point de calcul on obtienne au moins approximativement un équilibrage des poussées axiales.

4. Turbine à vapeur selon l'une des revendications 1 à 3, caractérisée en ce qu'au palier radial de l'arbre (34), sont associés des éléments d'amortissement extérieurs de palier et en ce que la vitesse de rotation de calcul de la turbine à vapeur est de préférence supérieure à la première vitesse de rotation critique.

5. Turbine à vapeur selon l'une des revendications 1 à 4, caractérisée en ce que la roue (2) et l'arbre (34) présentent des perçages disposés dans des positions non centrées, en dehors de l'axe de rotation (20), pour recevoir les vis (29) servant à l'assemblage.

6. Turbine à vapeur selon l'une des revendications 1 à 5, dans laquelle une couronne de buses (8) est agencée dans un carter de turbine (6), caractérisée en ce que, en utilisant le pouvoir de réflexion, les trajectoires des particules de salissure qui pénètrent avec la vapeur sont influencées de manière que ces particules quittent la région des aubes (4) et/ou de la courbonne de buses (8).

7. Turbine à vapeur selon la revendication 6, caractérisée en ce que dans le carter (6) de la turbine et/ou dans la couronne de buses (8), est prévue au moins une chambre collectrice (14).

8. Turbine à vapeur selon la revendication 7, caractérisée en ce que, pour évacuer continuellement les particules de salissure, une conduite (16) débouche dans la chambre collectrice (14).

9. Turbine à vapeur selon l'une des revendications 6 à 8, caractérisée en ce que la couronne d'aubes (4) présente une possibilité de passage, en au moins un point de sa circonférence, le pas des aubes (4) et/ou les écartements des aubes (4) étant de préférence agrandis en cet endroit.

10. Turbine à vapeur selon l'une des revendications 6 à 9, <u>caractérisée en ce que</u> la surface de sortie (18) d'au moins une buse de la couronne de buses (8) est inclinée sur l'axe de rotation (20).

11. Turbine à vapeur selon l'une des revendications 6 à 10, <u>caractérisée en ce que</u> la surface d'entrée (36) présente au moins une aube (4) de la roue (2) inclinée sur l'axe de rotation (20).

12. Turbine à vapeur selon l'une des revendications 1 à 11, <u>caractérisée en ce que</u>, sur son autre surface frontale axiale qui est à l'opposé de sa surface frontale portant les aubes (4), la roue (2) porte un contre- poids (26) qui est de préférence constitué par un anneau divisé dans la direction circonférentielle en segments individuels au moyen de fentes axiales (28).

FIG.1

FIG. 2

FIG. 3

6

8

18

12

22

4

24

26

28

38

30

2

32

34

20

FIG. 4

FIG. 5